# EUROPEAN PATENT APPLICATION

(11) **EP 4 546 062 A1**
(43) Date of publication of application: **30.04.2025**
(21) Application number: 23829776.6
(22) Date of filing: 17.05.2023
(51) Int. Cl.: G05B 19/042

(54) **VEHICLE REMOTE CONTROL METHOD AND APPARATUS, ELECTRONIC DEVICE, AND STORAGE MEDIUM**

(30) Priority: 27.06.2022 CN 202210742019
(71) Applicant: Ningbo Lotus Robotics Co., Ltd., Ningbo, Zhejiang 315335 (CN)
(72) Inventor: LIN, Sichen, Wuhan, Hubei 430058 (CN)
(74) Representative: Barker Brettell LLP
(86) International application number: PCT/CN2023/094721
(87) International publication number: WO 2024/001590

(57) **Abstract**

The disclosure relates to a vehicle remote control method, applied to a cloud control unit, where the method includes: acquiring network status information and running status information of a vehicle; in a case that the network status information indicates that the vehicle meets a remote control requirement, determining a vehicle control mode adapted to the running status information, where the vehicle control mode includes a remote driving vehicle control mode, a remote navigation vehicle control mode, or a remote monitoring vehicle control mode, and a control range of the cloud control unit increases in turn among the remote driving control mode, the remote navigation vehicle control mode, and the remote monitoring vehicle control mode; and performing control operation on the vehicle based on the vehicle control mode. **In** the present disclosure, by determining the vehicle control mode adapted to the running status information of the vehicle, the remote control operation on the vehicle can be completed, which improves usage efficiency of remote assistance driving.

## Description

### TECHNICAL FIELD

The invention relates to the technical field of intelligent driving, in particular to a vehicle remote control method and apparatus, electronic device, and storage medium.

### BACKGROUND

With the development of automobile intelligent driving technology, currently a vehicle with an intelligent driving function can process parts of driving scenarios through its own algorithm, but there are still some complex driving scenarios that the intelligent driving function cannot process. The scenarios that the intelligent driving function cannot cope with can be solved through a remote driving control. The remote driving control uses a driver in front of a cloud cockpit to control the vehicle. The cloud cockpit may display information from a vehicle end to the driver for performing a vehicle control, so as to deal with a relatively complex scenario. In the related art, a control method of remote driving can only control the vehicle through a steering wheel, brake pedal, and/or accelerator pedal. The control of the vehicle is relatively simple, the vehicle cannot be accurately controlled, and a task of directly controlling the vehicle is achieved with relatively low efficiency.

### SUMMARY

In order to solve at least one of the above-mentioned technical problems, the present disclosure provides a vehicle remote control method and apparatus, electronic device, and storage medium.

In a first aspect, the present disclosure provides a vehicle remote control method, applied to a cloud control unit, where the method includes:
acquiring network status information and running status information of a vehicle;
in a case that the network status information indicates that the vehicle meets a remote control requirement, determining a vehicle control mode adapted to the running status information, where the vehicle control mode includes a remote driving vehicle control mode, a remote navigation vehicle control mode, or a remote monitoring vehicle control mode, and a control range of the cloud control unit increases in turn among the remote driving control mode, the remote navigation vehicle control mode, and the remote monitoring vehicle control mode; and
performing control operation on the vehicle based on the vehicle control mode.

In an optional embodiment, the running status information includes driving status information, and the determining the vehicle control mode adapted to the running status information includes: in response to a case that the driving status information meets a driving need, determining the remote driving vehicle control mode as the vehicle control mode adapted to the running status information; or
the running status information includes driving status information and position information of the vehicle, and the determining the vehicle control mode adapted to the running status information includes: in response to a case that the driving status information meets a driving need and the position information meets a positioning accuracy requirement, determining the remote navigation vehicle control mode as the vehicle control mode adapted to the running status information; or
the running status information includes driving status information, position information of the vehicle and path planning algorithm configuration information, and the determining the vehicle control mode adapted to the running status information includes: in response to a case that the driving status information meets a driving need, the position information meets a positioning accuracy requirement, and the path planning algorithm configuration information indicates that the vehicle supports a path planning algorithm, determining the remote monitoring vehicle control mode as the vehicle control mode adapted to the running status information.

In an optional embodiment, in a case that the vehicle control mode adapted to the running status information is the remote driving vehicle control mode, the performing the control operation on the vehicle based on the vehicle control mode includes:
controlling travelling action of the vehicle through sending a first vehicle control instruction to the vehicle, where the first vehicle control instruction includes an accelerator opening-degree instruction, a brake opening-degree instruction or a steering angle instruction.

In an optional embodiment, in a case that the vehicle control mode adapted to the running status information is the remote navigation vehicle control mode, the performing the control operation on the vehicle based on the vehicle control mode includes:
determining a planning path according to the position information; and
sending a second vehicle control instruction to the vehicle according to the planning path, so as to control the vehicle to travel along the planning path, where the second vehicle control instruction includes coordinate information characterizing being used to indicate the planning path.

In an optional embodiment, in a case that the vehicle control mode adapted to the running status information is the remote monitoring vehicle control mode, the performing the control operation on the vehicle based on the vehicle control mode includes:
acquiring travelling image information of the vehicle; and
performing monitoring operation on the vehicle according to the travelling image information, and sending a third vehicle control instruction to the vehicle according to timing, where the third vehicle control instruction includes a start instruction, a pause instruction or a stop instruction.

In an optional embodiment, the method further includes:the network status information and the running status information are transmitted to the cloud control unit through a network connection, the network connection further transmits time information and encryption information corresponding to the running status information, and the cloud control unit determines accuracy of the running status information through the time information and the encryption information.

In a second aspect, the present invention further provides a vehicle remote control apparatus, including:
an acquiring module, configured to acquire network status information and running status information of a vehicle;
a mode matching module, configured to determine, in a case that the network status information indicates that the vehicle meets a remote control requirement, a vehicle control mode adapted to the running status information, where the vehicle control mode includes a remote driving vehicle control mode, a remote navigation vehicle control mode, or a remote monitoring vehicle control mode, and a control range of the cloud control unit increases in turn among the remote driving control mode, the remote navigation vehicle control mode, and the remote monitoring vehicle control mode; and
a controlling module, configured to perform control operation on the vehicle based on the vehicle control mode.

In a third aspect, the present invention further provides an electronic device, including:
a processor, and
a memory storing executable instructions for the processor;
where the processor is configured to execute the instructions to implement the foregoing vehicle remote control method.

In a fourth aspect, the present invention further provides a storage medium, where when instructions in the storage medium are executed by a processor of an electronic device, the electronic device is enabled to perform the foregoing vehicle remote control method.

In a fifth aspect, the present invention further provides a computer program product, where the computer program product includes a computer program, the computer program is stored in a readable storage medium, and at least one processor of a computer device reads and executes the computer program from the readable storage medium, so that the device performs the foregoing vehicle remote control method.

It should be understood that both the foregoing general description and the following detailed description are only exemplary and explanatory, rather than restrictive on the present disclosure.

The implementation of the present disclosure has the following beneficial effects.

Network status information and running status information of a vehicle are acquired; in a case that the network status information indicates that the vehicle meets a remote control requirement, a vehicle control mode adapted to the running status information is determined, where the vehicle control mode includes a remote driving vehicle control mode, a remote navigation vehicle control mode, or a remote monitoring vehicle control mode, and a control range of the cloud control unit increases in turn among the remote driving control mode, the remote navigation vehicle control mode, and the remote monitoring vehicle control mode; and control operation is performed on the vehicle based on the vehicle control mode.

In the present disclosure, by acquiring the network status information and the running status information of the vehicle, remote monitoring of the network status and the running status of the vehicle is realized, which provides a good foundation for the remote control of the vehicle; by determining the vehicle control mode adapted to the running status information, adaptation of different vehicle control modes according to different running status information is realized, which satisfies the needs of different vehicles for remote control, where an optimal vehicle control solution can be adapted to respective vehicle, which improves efficiency of remote vehicle control and achievement rate of vehicle control tasks.

Other features and aspects of the present disclosure will become apparent from the following detailed description of exemplary embodiments with reference to the accompanying drawings.

### BRIEF DESCRIPTION OF DRAWINGS

To illustrate more clearly the technical solutions and advantages in the embodiments of the present application or in the prior art, the following briefly introduces the accompanying drawings required for describing the embodiments or the prior art. Apparently, the accompanying drawings in the following description are only some embodiments of the present application, and those of ordinary skill in the art may further obtain other drawings based on these accompanying drawings without creative efforts. The drawings herein are incorporated into the description and constitute a part of this description, illustrate embodiments consistent with the present disclosure, and are used to explain the principles of the present disclosure together with the description, and do not constitute an undue limitation to the present disclosure.
FIG. 1 is a schematic diagram of an implementation environment shown according to an exemplary embodiment.
FIG. 2 is a flowchart of a vehicle remote control method shown according to an exemplary embodiment.
FIG. 3 is a flowchart for determining a vehicle control mode adapted to running status information shown according to an exemplary embodiment.
FIG. 4 is a flowchart for performing control operation on a vehicle shown according to an exemplary embodiment.
FIG. 5 is another flowchart for performing control operation on a vehicle shown according to an exemplary embodiment.
FIG. 6 is a block diagram of a vehicle remote control apparatus shown according to an exemplary embodiment.
FIG. 7 is a block diagram of an electronic device for vehicle remote control shown according to an exemplary embodiment.

### DESCRIPTION OF EMBODIMENTS

The following clearly and completely describes the technical solutions in the embodiments of the present description with reference to the accompanying drawings in the embodiments of the present description. Apparently, the described embodiments are only a part of the embodiments of the present description, rather than all of the embodiments. Based on the embodiments in the present description, all other embodiments obtained by those of ordinary skill in the art without making creative efforts shall fall within the protection scope of the present invention.

It should be noted that terms "first", "second" and the like in the description and claims of the present invention and the above accompanying drawings are used to distinguish similar objects, and are not necessarily used to describe a specific order or sequence. It should be understood that the used data are interchangeable under appropriate circumstances, so that the embodiments of the invention described herein can be implemented in an order other than those illustrated or described herein. Furthermore, terms "include" and "have" and any variations thereof are intended to cover a non-exclusive inclusion. For example, a process, method, system, product, or server, including a series of steps or units, does not need to be only limited to those expressly listed steps or units, but may also include other steps or units which are not expressly listed or are inherent to such process, method, product, or device.

Various exemplary embodiments, features, and aspects of the present disclosure will be described in detail below with reference to the accompanying drawings. Identical reference signs in the drawings denote elements with an identical or similar function. Although various aspects of embodiments are illustrated in the drawings, the drawings are not necessarily drawn to scale unless otherwise indicated. The specific word "exemplary" herein means "taking as an example, embodiment, or illustration". Any embodiment described herein as "exemplary" is not necessarily to be construed as preferred or better than other embodiments.

Term "and/or" herein is merely an association relationship describing an associated object, and indicates that there may exist three relationships. For example, A and/or B may indicate such three cases that A exists alone, A and B exist simultaneously, and B exists alone. In addition, term "at least one" herein means any one of a plurality of things or any combination of at least two of a plurality of things. For example, including at least one of A, B, and C may mean including any one or more elements selected from a set consisting of A, B, and C.

In addition, in order to better illustrate the present disclosure, numerous specific details are given in the following description of embodiments. It should be understood by those skilled in the art that the present disclosure may still be implemented without certain specific details. In some examples, a method, manner, element and circuit well known to those skilled in the art are not described in detail, so as to highlight the gist of the present disclosure.

In the related art, a control method of remote driving for a vehicle can only control the vehicle through a steering wheel, brake pedal, and/or accelerator pedal. The control of the vehicle is relatively simple, the vehicle cannot be accurately controlled, and a task of directly controlling the vehicle is achieved with relatively low efficiency.

In order to have different control methods for different scenarios to match the vehicle's own path algorithm for controlling the vehicle, and make a cloud cockpit can more effectively control the vehicle to complete vehicle movement, improve the efficiency of task achievement for vehicle control, and shorten a vehicle control time, an embodiment of the present disclosure provides a vehicle remote control method.

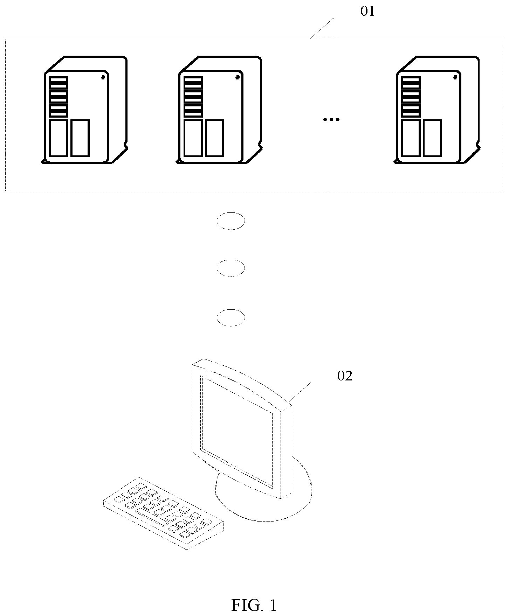

Referring to FIG. 1, FIG. 1 is a schematic diagram of an application environment shown according to an exemplary embodiment. As shown in FIG. 1, the application environment may include a server 01 and a terminal 02.

In an optional embodiment, the server 01 may be used for the vehicle remote control method to perform computing processing. Specifically, the server 01 may be an independent physical server, or may be a server cluster or distributed system formed by multiple physical servers, or may be a cloud server providing cloud service, cloud database, cloud computing, cloud function, cloud storage, network service, cloud communication, middleware service, domain name service, security service, content delivery network (Content Delivery Network, CDN), as well as basic cloud computing service such as big data and an artificial intelligence platform.

In an optional embodiment, the terminal 02 may perform computing processing in conjunction with the vehicle remote control method on the server 01. Specifically, the terminal 02 may include, but is not limited to, an electronic device of a type such as a smart phone, a desktop computer, a tablet computer, a notebook computer, a smart speaker, a digital assistant, an augmented reality (augmented reality, AR)/virtual reality (virtual reality, VR) device, or a smart wearable device. Optionally, an operating system running on the electronic device may include, but is not limited to, an Android system, an IOS system, a Linux system, a Windows system, a Unix system, and the like.

For example, network status information and running status information of a vehicle are entered on the terminal 02, and the server 01 acquires the network status information and running status information on the terminal 02; then determines, in a case that the network status information indicates that the vehicle meets a remote control requirement, a vehicle control mode adapted to the running status information, where the vehicle control mode includes a remote driving vehicle control mode, a remote navigation vehicle control mode, or a remote monitoring vehicle control mode, and a control range of a cloud control unit increases in turn among the remote driving control mode, the remote navigation vehicle control mode, and the remote monitoring vehicle control mode; and performs control operation on the vehicle based on the vehicle control mode; finally transmits a control result to the terminal 02.

In addition, it should be noted that what is shown in FIG. 1 is an application environment only provided in the present disclosure, and in a practical application, other application environments may also be included.

In the embodiment of the present description, the server 01 and the terminal 02 may be directly or indirectly connected in a wired or wireless communication manner, which is not limited in the present disclosure.

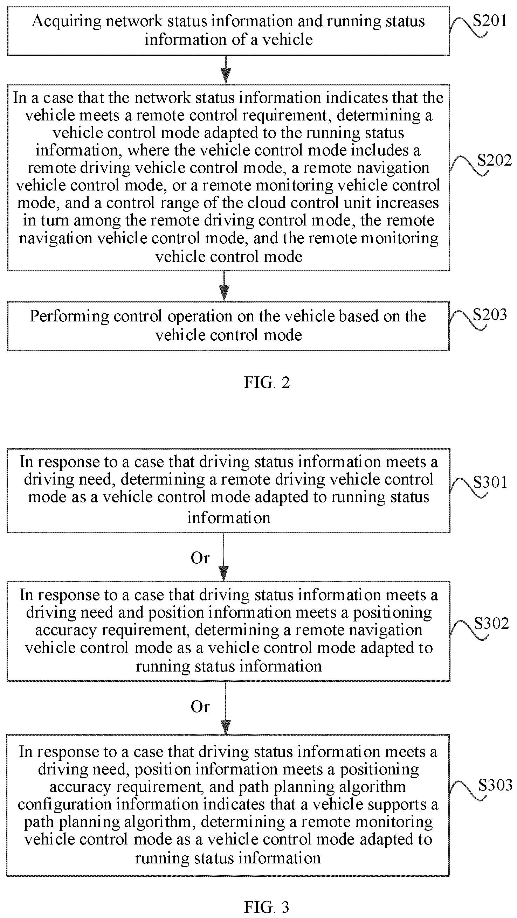

FIG. 2 is a flowchart of a vehicle remote control method shown according to an exemplary embodiment. As shown in FIG. 2, the vehicle remote control method includes the following.

Step S201, acquiring network status information and running status information of a vehicle.

In the embodiment of the present disclosure, the network status information of the vehicle can reflect a network connection relationship between the vehicle and a cloud control unit, as well as network status of the vehicle itself. The running status information of the vehicle includes information reflecting running status of the vehicle, such as door status information, light status information, power system status information, braking system status information, and steering system status information. Optionally, the acquiring may be in a manner that a vehicle end sends the network status information and the running status information to the cloud control unit through a 5G network link, and the cloud control unit receives the network status information and the running status information sent by the vehicle end.

Step S202, in a case that the network status information indicates that the vehicle meets a remote control requirement, determining a vehicle control mode adapted to the running status information, where the vehicle control mode includes a remote driving vehicle control mode, a remote navigation vehicle control mode, or a remote monitoring vehicle control mode, and a control range of the cloud control unit increases in turn among the remote driving control mode, the remote navigation vehicle control mode, and the remote monitoring vehicle control mode.

In the embodiment of the present disclosure, the network status information indicating that the vehicle meets the remote control requirement may be that a stable and reliable network connection relationship is successfully established between the vehicle end and the cloud control unit, the cloud control unit may receive the network status information and the running status information transmitted by the vehicle end, and the vehicle end may respond to a vehicle control instruction issued by the cloud control unit. In an embodiment of the present disclosure, performing issuing of the vehicle control instruction to determine the vehicle control mode adapted to the running status information includes the following.

FIG. 3 is a flowchart for determining a vehicle control mode adapted to running status information shown according to an exemplary embodiment. As shown in FIG. 3,
running status information includes driving status information, and determining a vehicle control mode adapted to the running status information includes:
step S301, in response to a case that the driving status information meets a driving need, determining a remote driving vehicle control mode as the vehicle control mode adapted to the running status information.

In the embodiment of the present disclosure, when a vehicle end confirms a case that the running status information of the vehicle meets the driving need, the vehicle control mode is determined as the remote driving vehicle control mode. In the remote driving vehicle control mode, a cloud cockpit will simulate the function of an actual vehicle cockpit, and a cloud driver will perform controlling on the vehicle and issue a vehicle control instruction according to the running status information.

Alternatively, running status information includes driving status information and position information of a vehicle, and determining a vehicle control mode adapted to the running status information includes:
step S302, in response to a case that the driving status information meets a driving need and the position information meets a positioning accuracy requirement, determining a remote navigation vehicle control mode as the vehicle control mode adapted to the running status information.

In the embodiment of the present disclosure, when a vehicle end confirms a case that the running status information of the vehicle meets the driving need, and the position information of the vehicle indicates that a position of the vehicle meets a high-precision positioning scenario, the vehicle control mode is determined as the remote navigation vehicle control mode. In the remote navigation vehicle control mode, a cloud driver will perform planning on a vehicle travelling path according to the position of the vehicle on a map.

Alternatively, running status information includes driving status information, position information of a vehicle and path planning algorithm configuration information, and determining a vehicle control mode adapted to the running status information includes:
step S303, in response to a case that the driving status information meets a driving need, the position information meets a positioning accuracy requirement, and the path planning algorithm configuration information indicates that the vehicle supports a path planning algorithm, determining a remote monitoring vehicle control mode as the vehicle control mode adapted to the running status information.

In the embodiment of the present disclosure, when a vehicle end confirms a case that the running status information of the vehicle meets the driving need, the position information of the vehicle indicates that a position of the vehicle meets a high-precision positioning scenario, and the path planning algorithm configuration information indicates that the vehicle supports the path planning algorithm, that is, a system of the vehicle end can support a planning algorithm scenario, the vehicle control mode is determined as the remote monitoring vehicle control mode. In the remote monitoring vehicle control mode, a cloud driver will perform monitoring on travelling of the vehicle.

Based on the above, in the embodiment of the present disclosure, through processing of the running status information, running information of different vehicles can be learn, which is beneficial for subsequent matching of vehicle control modes; according to different contents contained in the running status information, different vehicle control modes are adapted to realize remote control of vehicles in different running status, which satisfies the needs of different vehicles for remote control, where an optimal vehicle control solution can be adapted to respective vehicle, which improves efficiency of remote vehicle control, reduces vehicle control time of remote control for a single vehicle, and improves achievement efficiency of a vehicle control task.

Step S203, performing control operation on the vehicle based on the vehicle control mode.

In an embodiment of the present disclosure, performing the control operation on the vehicle based on the vehicle control mode includes the following.

In a case that the vehicle control mode adapted to the running status information is the remote driving vehicle control mode, performing the control operation on the vehicle based on the vehicle control mode includes:
step S401, controlling travelling action of the vehicle through sending a first vehicle control instruction to the vehicle, where the first vehicle control instruction includes an accelerator opening-degree instruction, a brake opening-degree instruction or a steering angle instruction.

In the embodiment of the present disclosure, a cloud cockpit will simulate the function of an actual vehicle cockpit, and control the travelling action of the vehicle through sending to the vehicle the first vehicle control instruction, including the accelerator opening-degree instruction, the brake opening-degree instruction, or the steering angle instruction. Optionally, when the first vehicle control instruction is the accelerator opening-degree instruction, the vehicle end receives the accelerator opening-degree instruction and adjusts an accelerator larger or less according to the accelerator opening-degree instruction; when the first vehicle control instruction is the brake opening-degree instruction, the vehicle end receives the brake opening-degree instruction and adjusts brake action larger or less according to the brake opening-degree instruction; and when the first vehicle control instruction is the steering angle instruction, the vehicle end receives the steering angle instruction and adjusts a vehicle steering angle according to the steering angle instruction.

Based on the above, in the embodiment of the present disclosure, through sending the first vehicle control instruction to the vehicle, controlling the travelling action of the vehicle is realized; through sending to the vehicle the accelerator opening-degree instruction, the brake opening-degree instruction, or the steering angle instruction, an accelerator opening-degree, brake opening-degree, or steering angle of the vehicle can be remotely controlled in real time during a travelling process of the vehicle, thus realizing convenient control of basic travelling action of the vehicle, and satisfying safe travelling need of the vehicle.

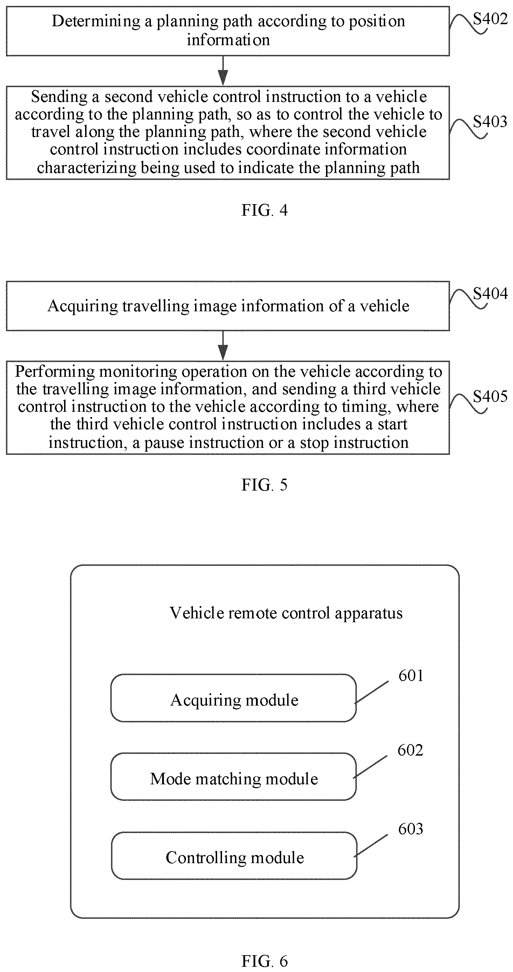

FIG. 4 is a flowchart for performing control operation on a vehicle shown according to an exemplary embodiment. As shown in FIG. 4, in a case that the vehicle control mode adapted to the running status information is the remote navigation vehicle control mode, performing the control operation on the vehicle based on the vehicle control mode includes the following.

Step S402, determining a planning path according to position information.

In the embodiment of the present disclosure, determining the planning path according to the position information includes: a cloud driver determines a position of a vehicle on a map according to the position information, and formulates the planning path suitable for vehicle travelling according to the position of the vehicle on the map.

Step S403, sending a second vehicle control instruction to the vehicle according to the planning path, so as to control the vehicle to travel along the planning path, where the second vehicle control instruction includes coordinate information characterizing being used to indicate the planning path.

In the embodiment of the present disclosure, the cloud driver, according to the planning path, sends the second vehicle control instruction to the vehicle to control the vehicle to travel according to the path, and the second vehicle control instruction includes the coordinate information indicating the planning path. Optionally, when the second vehicle control instruction is to indicate a certain coordinate point of the planning path, the vehicle end receives information on the coordinate point, and a coordinate point analyzing module of the vehicle end performs analysis on the coordinate point, and calculates out a travelling path of the vehicle. Optionally, during a travelling process of the vehicle, there is further a safety-and-anti-collision module to prevent an emergency during the travelling process, which reduces vehicle collision risk, and ensures vehicle travelling safety.

Based on the above, in the embodiment of the present disclosure, through acquiring the position information of the vehicle, the planning of the travelling path of the vehicle is realized, which plays a certain guiding role, and reduces a time required for a user to plan the path; through sending the second vehicle control instruction to the vehicle, the travelling path of the vehicle can be guided, which provides a travelling direction for the vehicle, realizes remote control of the travelling path of the vehicle during a travelling process of the vehicle, and solves the problem of path planning and route guidance in remote control.

FIG. 5 is another flowchart for performing control operation on a vehicle shown according to an exemplary embodiment. As shown in FIG. 5, in a case that the vehicle control mode adapted to the running status information is the remote monitoring vehicle control mode, performing the control operation on the vehicle based on the vehicle control mode includes the following.

Step S404, acquiring travelling image information of the vehicle.

In the embodiment of the present disclosure, the travelling image information of the vehicle includes: an image picture captured by a dash cam carried by the vehicle, or an image picture captured by a surveillance camera installed outside a vehicle body. Optionally, the acquiring may be in a manner that a vehicle end sends the travelling image information to a cloud control unit through a 5G network link, and the cloud control unit receives the travelling image information sent by the vehicle end.

Step S405, performing monitoring operation on the vehicle according to the travelling image information, and sending a third vehicle control instruction to the vehicle according to timing, where the third vehicle control instruction includes a start instruction, a pause instruction or a stop instruction.

In the embodiment of the present disclosure, the vehicle moves based on its own planning path, and a cloud cockpit personnel may perform vehicle monitoring based on the received travelling image information of the vehicle, and issue to the vehicle the third vehicle control instruction, including a start instruction, a pause instruction, or a stop instruction, according to timing during a monitoring process. Optionally, when the third vehicle control instruction is the start instruction, the vehicle end receives the start instruction and performs vehicle starting action according to the start instruction; when the third vehicle control instruction is the pause instruction, the vehicle end receives the pause instruction and performs vehicle pausing action according to the pause instruction; when the third vehicle control instruction is the stop instruction, the vehicle end receives the stop instruction and performs vehicle stopping action according to the stop instruction.

Based on the above, in the embodiment of the present disclosure, through acquiring the travelling image information of the vehicle, road condition information can be learn during a travelling process of the vehicle; through performing the monitoring operation on the vehicle according to the travelling image information, a vehicle movement can be grasped in real time, which provides safety guarantee for vehicle travelling; through sending to the vehicle the start instruction, the pause instruction, or the stop instruction, the vehicle starting, pausing or stopping action can be remotely controlled in real time during the travelling process of the vehicle, which avoids a traffic accident caused by a vehicle judgment error, and reduces vehicle travelling risk.

In an optional embodiment, the above vehicle remote control method further includes:
the network status information and the running status information are transmitted to the cloud control unit through a network connection, the network connection further transmits time information and encryption information corresponding to the running status information, and the cloud control unit determines accuracy of the running status information through the time information and the encryption information.

In the embodiment of the present disclosure, a network connection module of the vehicle is connected to the vehicle end and the cloud control unit, and the network status information and the running status information are transmitted to the cloud control unit through the network connection. Since there must be perfect time information and encryption-decryption in a signal transmission to ensure reliability, time information and encryption information corresponding to the running status information are further transmitted through the network connection. A time stamp and encryption information must be carried with during packaging and transmitting a signal. The network connection further has a heartbeat contact.

Based on the above, in the embodiment of the present disclosure, through the network connection, a remote connection between the vehicle end and the cloud control unit is realized, which provides an interaction channel between the status information of the vehicle and the vehicle control instruction of the cloud end; through transmitting the corresponding time information and encryption information, accuracy and reliability of the signal transmission are guaranteed, which satisfies the requirement on timeliness for vehicle remote control.

In the above embodiments, in the present disclosure, through processing of the running status information, running information of different vehicles can be learn, so as to realize remote control of vehicles in different running status, which satisfies the needs of different vehicles for remote control, where an optimal vehicle control solution can be adapted to respective vehicle, which improves efficiency of remote vehicle control, reduces vehicle control time of remote control for a single vehicle, and improves achievement efficiency of a vehicle control task; through sending to the vehicle the accelerator opening-degree instruction, the brake opening-degree instruction, or the steering angle instruction, convenient control of basic travelling action of the vehicle is realized, which satisfies safe travelling need of the vehicle; through acquiring the position information of the vehicle, the planning of the travelling path of the vehicle is realized, which reduces a time required for a user to plan the path, and solves the problem of path planning and route guidance in remote control; through performing the monitoring operation on the vehicle according to the travelling image information, a vehicle movement can be grasped in real time, and the vehicle starting, pausing or stopping action can be remotely controlled in real time during the travelling process of the vehicle, which avoids a traffic accident caused by a vehicle judgment error, provides safety guarantee for vehicle travelling, and reduces vehicle travelling risk; through transmitting the corresponding time information and encryption information, accuracy and reliability of the signal transmission are guaranteed, which satisfies the requirement on timeliness for vehicle remote control.

In a specific implementation, an implementation process of a technical solution in an embodiment of the present application is as follows.

The above vehicle remote control method is applied to a remote driving assistance system including a vehicle-end control unit and a cloud control unit, and the cloud control unit and the vehicle-end control unit are connected through a network. Here, the process of the cloud control unit implementing the above method is as follows.

Acquiring network status information and running status information of a vehicle.

The above implementation process includes: a vehicle information sending module at the vehicle end sends the network status information and the running status information to the cloud control unit through a 5G network link of a 5G networking module, and the cloud control unit receives the network status information and the running status information sent by the vehicle end.

In a case that the network status information indicates that the vehicle meets a remote control requirement, determining a vehicle control mode adapted to the running status information, where the vehicle control mode includes a remote driving vehicle control mode, a remote navigation vehicle control mode, or a remote monitoring vehicle control mode, and a control range of the cloud control unit increases in turn among the remote driving control mode, the remote navigation vehicle control mode, and the remote monitoring vehicle control mode.

The above implementation process includes: a stable and reliable network connection relationship is successfully established between the vehicle end and the cloud control unit, the cloud control unit may receive the network status information and the running status information transmitted by the vehicle end, and the vehicle end may respond to a vehicle control instruction issued by the cloud control unit. Performing issuing of the vehicle control instruction to determine the vehicle control mode adapted to the running status information includes the following.

The running status information includes driving status information, and determining the vehicle control mode adapted to the running status information includes: in response to a case that the driving status information meets a driving need, determining the remote driving vehicle control mode as the vehicle control mode adapted to the running status information.

The above implementation process includes: when the vehicle end confirms a case that the running status information of the vehicle meets the driving need, the vehicle control mode is determined as the remote driving vehicle control mode. In the remote driving vehicle control mode, the function of an actual vehicle cockpit is simulated through a cloud cockpit, and the vehicle is controlled and the vehicle control instruction is issued according to the running status information.

Alternatively, the running status information includes driving status information and position information of the vehicle, and determining the vehicle control mode adapted to the running status information includes: in response to a case that the driving status information meets a driving need and the position information meets a positioning accuracy requirement, determining the remote navigation vehicle control mode as the vehicle control mode adapted to the running status information.

The above implementation process includes: when the vehicle end confirms a case that the running status information of the vehicle meets the driving need, and the position information of the vehicle indicates that a position of the vehicle meets a high-precision positioning scenario, the vehicle control mode is determined as the remote navigation vehicle control mode. In the remote navigation vehicle control mode, a vehicle travelling path is planned according to the position of the vehicle on a map.

Alternatively, the running status information includes driving status information, position information of the vehicle and path planning algorithm configuration information, and determining the vehicle control mode adapted to the running status information includes: in response to a case that the driving status information meets a driving need, the position information meets a positioning accuracy requirement, and the path planning algorithm configuration information indicates that the vehicle supports a path planning algorithm, determining the remote monitoring vehicle control mode as the vehicle control mode adapted to the running status information.

The above implementation process includes: when the vehicle end confirms a case that the running status information of the vehicle meets the driving need, the position information of the vehicle indicates that a position of the vehicle meets a high-precision positioning scenario, and the path planning algorithm configuration information indicates that the vehicle supports the path planning algorithm, that is, a system of the vehicle end can support a planning algorithm scenario, the vehicle control mode is determined as the remote monitoring vehicle control mode. In the remote monitoring vehicle control mode, travelling of the vehicle is monitored.

Based on the above, in the embodiment of the present disclosure, through processing of the running status information, running information of different vehicles can be learn, which is beneficial for subsequent matching of vehicle control modes; according to different contents contained in the running status information, different vehicle control modes are adapted to realize remote control of vehicles in different running status, which satisfies the needs of different vehicles for remote control, where an optimal vehicle control solution can be adapted to respective vehicle, which improves efficiency of remote vehicle control, reduces vehicle control time of remote control for a single vehicle, and improves achievement efficiency of a vehicle control task.

Performing control operation on the vehicle based on the vehicle control mode, which includes the following.

In a case that the vehicle control mode adapted to the running status information is the remote driving vehicle control mode, performing the control operation on the vehicle based on the vehicle control mode includes: controlling travelling action of the vehicle through sending a first vehicle control instruction to the vehicle, where the first vehicle control instruction includes an accelerator opening-degree instruction, a brake opening-degree instruction or a steering angle instruction.

The above implementation process includes: a cloud cockpit will simulate the function of an actual vehicle cockpit, and the cloud control unit controls the travelling action of the vehicle through sending to the vehicle the first vehicle control instruction, including the accelerator opening-degree instruction, the brake opening-degree instruction, or the steering angle instruction. When the first vehicle control instruction is the accelerator opening-degree instruction, the vehicle-end control unit at the vehicle end receives the accelerator opening-degree instruction and adjusts an accelerator larger or less according to the accelerator opening-degree instruction; when the first vehicle control instruction is the brake opening-degree instruction, the vehicle-end control unit at the vehicle end receives the brake opening-degree instruction and adjusts brake action larger or less according to the brake opening-degree instruction; and when the first vehicle control instruction is the steering angle instruction, the vehicle-end control unit at the vehicle end receives the steering angle instruction and adjusts a vehicle steering angle according to the steering angle instruction.

Based on the above, in the embodiment of the present disclosure, through sending the first vehicle control instruction to the vehicle, controlling the travelling action of the vehicle is realized; through sending to the vehicle the accelerator opening-degree instruction, the brake opening-degree instruction, or the steering angle instruction, an accelerator opening-degree, brake opening-degree, or steering angle of the vehicle can be remotely controlled in real time during a travelling process of the vehicle, thus realizing convenient control of basic travelling action of the vehicle, and satisfying safe travelling need of the vehicle.

In a case that the vehicle control mode adapted to the running status information is the remote navigation vehicle control mode, performing the control operation on the vehicle based on the vehicle control mode includes: determining a planning path according to the position information.

The above implementation process includes: a cloud driver determines a position of a vehicle on a map according to the position information, and formulates the planning path suitable for vehicle travelling according to the position of the vehicle on the map.

Sending a second vehicle control instruction to the vehicle according to the planning path, so as to control the vehicle to travel along the planning path, where the second vehicle control instruction includes coordinate information characterizing being used to indicate the planning path.

The above implementation process includes: the cloud control unit, according to the planning path, sends the second vehicle control instruction to the vehicle to control the vehicle to travel according to the path, and the second vehicle control instruction includes the coordinate information indicating the planning path. When the second vehicle control instruction is to indicate a certain coordinate point of the planning path, the vehicle-end control unit at the vehicle end receives information on the coordinate point, and a coordinate point analyzing module of the vehicle end performs analysis on the coordinate point, and calculates out a travelling path of the vehicle. During a travelling process of the vehicle, there is further a safety-and-anti-collision module to prevent an emergency during the travelling process, which reduces vehicle collision risk, and ensures vehicle travelling safety.

Based on the above, in the embodiment of the present disclosure, through acquiring the position information of the vehicle, the planning of the travelling path of the vehicle is realized, which plays a certain guiding role, and reduces a time required for a user to plan the path; through sending the second vehicle control instruction to the vehicle, the travelling path of the vehicle can be guided, which provides a travelling direction for the vehicle, realizes remote control of the travelling path of the vehicle during a travelling process of the vehicle, and solves the problem of path planning and route guidance in remote control.

In a case that the vehicle control mode adapted to the running status information is the remote monitoring vehicle control mode, performing the control operation on the vehicle based on the vehicle control mode includes:
acquiring travelling image information of the vehicle.

The above implementation process includes: the travelling image information of the vehicle is an image picture captured by a dash cam carried by the vehicle, or an image picture captured by a surveillance camera installed outside a vehicle body. The acquiring may be in a manner that a video transmitting module at the vehicle end sends the travelling image information to a cloud control unit through a 5G network link of a 5G networking module, and the cloud control unit receives the travelling image information sent by the vehicle end.

Performing monitoring operation on the vehicle according to the travelling image information, and sending a third vehicle control instruction to the vehicle according to timing, where the third vehicle control instruction includes a start instruction, a pause instruction or a stop instruction.

The above implementation process includes: the vehicle moves based on its own planning path, and a cloud cockpit personnel may perform vehicle monitoring based on the received travelling image information of the vehicle, and issue, through the cloud control unit, to the vehicle the third vehicle control instruction, including a start instruction, a pause instruction, or a stop instruction, according to timing during a monitoring process. When the third vehicle control instruction is the start instruction, the vehicle-end control unit at the vehicle end receives the start instruction and performs vehicle starting action according to the start instruction; when the third vehicle control instruction is the pause instruction, the vehicle-end control unit at the vehicle end receives the pause instruction and performs vehicle pausing action according to the pause instruction; when the third vehicle control instruction is the stop instruction, the vehicle-end control unit at the vehicle end receives the stop instruction and performs vehicle stopping action according to the stop instruction.

When the vehicle end receives the first vehicle control instruction, the second vehicle control instruction, or the third vehicle control instruction transmitted by the cloud control unit, the vehicle end is further equipped with an arbitrating module to ensure that a signal transmission channel between the cloud control unit and the vehicle is unique.

Based on the above, in the embodiment of the present disclosure, through acquiring the travelling image information of the vehicle, road condition information can be learn during a travelling process of the vehicle; through performing the monitoring operation on the vehicle according to the travelling image information, a vehicle movement can be grasped in real time, which provides safety guarantee for vehicle travelling; through sending to the vehicle the start instruction, the pause instruction, or the stop instruction, the vehicle starting, pausing or stopping action can be remotely controlled in real time during the travelling process of the vehicle, which avoids a traffic accident caused by a vehicle judgment error, and reduces vehicle travelling risk.

The above vehicle remote control method further includes:
the network status information and the running status information are transmitted to the cloud control unit through a network connection, the network connection further transmits time information and encryption information corresponding to the running status information, and the cloud control unit determines accuracy of the running status information through the time information and the encryption information.

The above implementation process includes: a network connection module of the vehicle is connected to the vehicle end and the cloud control unit, and the network status information and the running status information are transmitted to the cloud control unit through the network connection. Since there must be perfect time information and encryption-decryption in a signal transmission to ensure reliability, time information and encryption information corresponding to the running status information are further transmitted through the network connection. A time stamp and encryption information must be carried with during packaging and transmitting a signal. The network connection further has a heartbeat contact.

Based on the above, in the embodiment of the present disclosure, through the network connection, a remote connection between the vehicle end and the cloud control unit is realized, which provides an interaction channel between the status information of the vehicle and the vehicle control instruction of the cloud end; through transmitting the corresponding time information and encryption information, accuracy and reliability of the signal transmission are guaranteed, which satisfies the requirement on timeliness for vehicle remote control.

FIG. 6 is a block diagram of a vehicle remote control apparatus shown according to an exemplary embodiment. Referring to FIG. 6, the apparatus includes an acquiring module 601, a mode matching module 602, and a controlling module 603, where
the acquiring module 601 is configured to acquire network status information and running status information of a vehicle;
the mode matching module 602 is configured to determine, in a case that the network status information indicates that the vehicle meets a remote control requirement, a vehicle control mode adapted to the running status information, where the vehicle control mode includes a remote driving vehicle control mode, a remote navigation vehicle control mode, or a remote monitoring vehicle control mode, and a control range of the cloud control unit increases in turn among the remote driving control mode, the remote navigation vehicle control mode, and the remote monitoring vehicle control mode; and
the controlling module 603 is configured to perform control operation on the vehicle based on the vehicle control mode.

In an optional embodiment, the running status information includes driving status information, and the mode matching module 602 includes:
a first matching module, configured to determine, in response to a case that the driving status information meets a driving need, the remote driving vehicle control mode as the vehicle control mode adapted to the running status information; or
the running status information includes driving status information and position information of the vehicle, and the mode matching module 602 includes:
   a second matching module, configured to determine, in response to a case that the driving status information meets a driving need and the position information meets a positioning accuracy requirement, the remote navigation vehicle control mode as the vehicle control mode adapted to the running status information; or
   the running status information includes driving status information, position information of the vehicle and path planning algorithm configuration information, and the mode matching module 602 includes:
      a third matching module, configured to determine, in response to a case that the driving status information meets a driving need, the position information meets a positioning accuracy requirement, and the path planning algorithm configuration information indicates that the vehicle supports a path planning algorithm, the remote monitoring vehicle control mode as the vehicle control mode adapted to the running status information.

In an optional embodiment, in a case that the vehicle control mode adapted to the running status information is the remote driving vehicle control mode, that is, in a case that the mode matching module 602 includes the first matching module, the controlling module 603 includes:
a first vehicle controlling module, configured to control travelling action of the vehicle through sending a first vehicle control instruction to the vehicle, where the first vehicle control instruction includes an accelerator opening-degree instruction, a brake opening-degree instruction or a steering angle instruction.

In an optional embodiment, in a case that the vehicle control mode adapted to the running status information is the remote navigation vehicle control mode, that is, in a case that the mode matching module 602 includes the second matching module, the controlling module 603 includes:
a path planning module, configured to determine a planning path according to the position information; and
a second vehicle controlling module, configured to send a second vehicle control instruction to the vehicle according to the planning path, so as to control the vehicle to travel along the planning path, where the second vehicle control instruction includes coordinate information characterizing being used to indicate the planning path.

In an optional embodiment, in a case that the vehicle control mode adapted to the running status information is the remote monitoring vehicle control mode, that is, in a case that the mode matching module 602 includes the third matching module, the controlling module 603 includes:
an image information acquiring module, configured to acquire travelling image information of the vehicle; and
a third vehicle controlling module, configured to perform monitoring operation on the vehicle according to the travelling image information, and send a third vehicle control instruction to the vehicle according to timing, where the third vehicle control instruction includes a start instruction, a pause instruction or a stop instruction.

In an optional embodiment, the apparatus further includes:
a network connecting module, configured to transmit the network status information and the running status information to the cloud control unit through a network connection, where the network connection further transmits time information and encryption information corresponding to the running status information, and the cloud control unit determines accuracy of the running status information through the time information and the encryption information.

Regarding the apparatus in the above embodiments, the specific manner in which each module performs an operation has been described in detail in the embodiments of the method, and will not be described in detail herein.

In an exemplary embodiment, an electronic device is further provided, including: a processor, and a memory storing executable instructions for the processor; where the processor is used for the instructions to implement the vehicle remote control method according to the embodiments of the present disclosure.

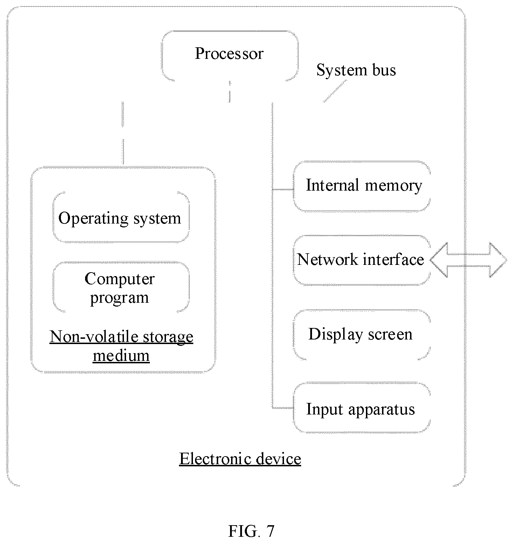

FIG. 7 is a block diagram of an electronic device for vehicle remote control shown according to an exemplary embodiment. The electronic device may be a terminal, of which an internal structure diagram may be as shown in FIG. 7. The electronic device includes a processor, a memory, a network interface, a display screen, and an input apparatus connected by a system bus. Here, the processor of the electronic device is configured to provide computing and control capabilities. The memory of the electronic device includes a non-volatile storage medium and an internal memory. The non-volatile storage medium stores an operating system and a computer program. The internal memory provides an environment for the operation of the operating system and the computer program in the non-volatile storage medium. The network interface of the electronic device is configured to communicate with an external terminal through a network connection. The computer program, when executed by a processor, implements the vehicle remote control method. The display screen of the electronic device may be a liquid crystal display screen or an electronic ink display screen. The input apparatus of the electronic device may be a touch layer covered on the display screen, or may be a key, trackball, or touchpad disposed on a housing of the electronic device, or may be an external keyboard, touchpad, or mouse, etc.

A person skilled in the art can understand that the structure shown in FIG. 7 is a block diagram of a partial structure only related to the solution of the present disclosure, and does not constitute a limitation to an electronic device to which the solution of the present disclosure is applied. The specific electronic device may include more or fewer components than those shown in the drawing, or combine some components, or have a different component arrangement.

In an exemplary embodiment, a storage medium is further provided. When instructions in the storage medium are executed by a processor of an electronic device, the electronic device is enabled to perform the vehicle remote control method in the embodiments of the present disclosure.

In an exemplary embodiment, a computer program product including instructions is further provided. When the computer program product runs on a computer, the computer performs the vehicle remote control method in the embodiments of the present disclosure.

Persons of ordinary skill in the art can understand that all or part of the processes in the method in the foregoing embodiments may be implemented by a computer program instructing relevant hardware. The computer program may be stored in a non-volatile computer-readable storage medium, and when the computer program is executed, the processes in the method in the foregoing embodiments may be included. Here, any reference to memory, storage, database, or other media used in the embodiments provided in the present disclosure may include non-volatile and/or volatile memory. Non-volatile memory may include read-only memory (ROM), programmable ROM (PROM), electrically programmable ROM (EPROM), electrically erasable programmable ROM (EEPROM), or flash memory. Volatile memory may include random access memory (RAM) or external high-speed buffer memory. As illustration but not limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), Synchlink (Synchlink) DRAM (SLDRAM), Rambus (Rambus) direct RAM (RDRAM), direct Rambus dynamic RAM (DRDRAM), and Rambus dynamic RAM (RDRAM).

Other implementations of the present disclosure will readily occur to those skilled in the art by considering the description and practicing the invention disclosed herein. The present disclosure is intended to cover any modification, use or adaptation of the present disclosure, which follows the general principles of the present disclosure and includes common general knowledge or conventional technical means in the technical field not disclosed in the present disclosure. The description and embodiments are only considered as exemplary, and the true scope and spirit of the disclosure is indicated by the claims.

It should be understood that the present disclosure is not limited to the precise structures that have been described above and illustrated in the accompanying drawings, and that various modifications and changes may be made without departing from the scope thereof. The scope of the present disclosure is limited only by the appended claims.

## Claims

1. A vehicle remote control method, applied to a cloud control unit, wherein the method comprises:
acquiring network status information and running status information of a vehicle;
in a case that the network status information indicates that the vehicle meets a remote control requirement, determining a vehicle control mode adapted to the running status information, wherein the vehicle control mode comprises a remote driving vehicle control mode, a remote navigation vehicle control mode, or a remote monitoring vehicle control mode, and a control range of the cloud control unit increases in turn among the remote driving control mode, the remote navigation vehicle control mode, and the remote monitoring vehicle control mode; and
performing control operation on the vehicle based on the vehicle control mode.

2. The method according to claim 1, wherein
the running status information comprises driving status information, and the determining the vehicle control mode adapted to the running status information comprises: in response to a case that the driving status information meets a driving need, determining the remote driving vehicle control mode as the vehicle control mode adapted to the running status information; or
the running status information comprises driving status information and position information of the vehicle, and the determining the vehicle control mode adapted to the running status information comprises: in response to a case that the driving status information meets a driving need and the position information meets a positioning accuracy requirement, determining the remote navigation vehicle control mode as the vehicle control mode adapted to the running status information; or
the running status information comprises driving status information, position information of the vehicle and path planning algorithm configuration information, and the determining the vehicle control mode adapted to the running status information comprises: in response to a case that the driving status information meets a driving need, the position information meets a positioning accuracy requirement, and the path planning algorithm configuration information indicates that the vehicle supports a path planning algorithm, determining the remote monitoring vehicle control mode as the vehicle control mode adapted to the running status information.

3. The method according to claim 1 or 2, wherein in a case that the vehicle control mode adapted to the running status information is the remote driving vehicle control mode, the performing the control operation on the vehicle based on the vehicle control mode comprises:
controlling travelling action of the vehicle through sending a first vehicle control instruction to the vehicle, wherein the first vehicle control instruction comprises an accelerator opening-degree instruction, a brake opening-degree instruction or a steering angle instruction.

4. The method according to claim 1 or 2, wherein in a case that the vehicle control mode adapted to the running status information is the remote navigation vehicle control mode, the performing the control operation on the vehicle based on the vehicle control mode comprises:
determining a planning path according to the position information; and
sending a second vehicle control instruction to the vehicle according to the planning path, so as to control the vehicle to travel along the planning path, wherein the second vehicle control instruction comprises coordinate information characterizing being used to indicate the planning path.

5. The method according to claim 1 or 2, wherein in a case that the vehicle control mode adapted to the running status information is the remote monitoring vehicle control mode, the performing the control operation on the vehicle based on the vehicle control mode comprises:
acquiring travelling image information of the vehicle; and
performing monitoring operation on the vehicle according to the travelling image information, and sending a third vehicle control instruction to the vehicle according to timing, wherein the third vehicle control instruction comprises a start instruction, a pause instruction or a stop instruction.

6. The method according to claim 1, wherein the method further comprises:
the network status information and the running status information are transmitted to the cloud control unit through a network connection, the network connection further transmits time information and encryption information corresponding to the running status information, and the cloud control unit determines accuracy of the running status information through the time information and the encryption information.

7. A vehicle remote control apparatus, comprising:
an acquiring module, configured to acquire network status information and running status information of a vehicle;
a mode matching module, configured to determine, in a case that the network status information indicates that the vehicle meets a remote control requirement, a vehicle control mode adapted to the running status information, wherein the vehicle control mode comprises a remote driving vehicle control mode, a remote navigation vehicle control mode, or a remote monitoring vehicle control mode, and a control range of a cloud control unit increases in turn among the remote driving control mode, the remote navigation vehicle control mode, and the remote monitoring vehicle control mode; and
a controlling module, configured to perform control operation on the vehicle based on the vehicle control mode.

8. An electronic device, comprising:
a processor, and
a memory storing executable instructions for the processor;
wherein the processor is used for the instructions to implement the vehicle remote control method according to any one of claims 1 to 6.

9. A storage medium, wherein when instructions in the storage medium are executed by a processor of an electronic device, the electronic device is enabled to perform the vehicle remote control method according to any one of claims 1 to 6.

10. A computer program product, wherein the computer program product comprises a computer program, the computer program is stored in a readable storage medium, and at least one processor of a computer device reads and executes the computer program from the readable storage medium, so that the device performs the vehicle remote control method according to any one of claims 1 to 6.
